(19)

Europäisches
Patentamt
European
Patent Office
Office européen
des brevets

(11) **EP 4 270 799 A1**

(12) **EUROPEAN PATENT APPLICATION**

(43) Date of publication:
**01.11.2023 Bulletin 2023/44**

(21) Application number: **22171000.7**

(22) Date of filing: **29.04.2022**

(51) International Patent Classification (IPC):
**H04B 1/401** (2015.01)     **H04B 7/06** (2006.01)
**G01S 7/00** (2006.01)     **G01S 13/32** (2006.01)

(52) Cooperative Patent Classification (CPC):
**H04B 1/401; G01S 7/006; G01S 13/02;
G01S 13/426; H04B 7/0617;** G01S 2013/0245

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NXP B.V.**
**5656 AG Eindhoven (NL)**

(72) Inventor: **van den Broeke, Leendert Albertus Dick
5656AG Eindhoven (NL)**

(74) Representative: **Miles, John Richard
NXP SEMICONDUCTORS
Intellectual Property Group
Abbey House
25 Clarendon Road
Redhill, Surrey RH1 1QZ (GB)**

Remarks:
Amended claims in accordance with Rule 137(2)
EPC.

(54) **DUAL-MODE ANALOG BEAM FORMER AND METHOD THEREFOR**

(57)     A dual-mode analog beam forming (ABF) circuit (104) for a communication unit (100) that includes a plurality of individual antenna elements (102), wherein the dual-mode ABF circuit (104) comprises at least one of: a RF splitter (212, 512) for splitting an input modulated RF signal into a plurality of modulated RF signals that are applied to respective antenna elements of the plurality of individual antenna elements and/or a RF combiner (232) for combining a plurality of input modulated RF signals into a modulated RF signal. A plurality of phase adjustment elements is respectively coupled to a beam-index LUT (117) and a phase of each phase adjustment element is individually controlled by the beam-index LUT. The beam-index LUT is configured to support antenna beam forming of two modes of operation, comprising an analog beam forming communication mode of operation; and a ST-CDMA-MIMO radar mode of operation.

FIG. 2

**Description**

Field of the invention

The field of the invention relates to dual-mode analog beam forming. The invention is applicable to, but not limited to, systems employing analog beam forming for a communication mode of operation and angular scanning through slow-time code division multiple access (ST-CDMA) multiple-in multiple-out (MIMO) for a radar mode of operation.

Background of the invention

It is known that some state-of-the-art cellular base stations operating in a millimetre wave (mmW) frequency band use analog beam formers (ABFs) and support a single data stream per (sub)panel or polarization. In order to maintain pace with ever-increasing communication data rates, it is envisaged that future cellular base stations will cover smaller geographical areas in order to prevent interference with other communication links, and therefore will be more closely spaced. Hence, the inventor of the present invention has recognised and appreciated that transmit powers of future cellular base stations will approach the transmit powers of some current land-based radar systems.
The simplest radar unit consists of a single, static transmit antenna and a single static receive antenna. Such a radar unit provides information on a distance between the radar unit and other objects, as well as being able to calculate absolute velocity of those objects within radar range. However, such a radar unit is unable to distinguish in which angular direction the object is detected. In order for radar units to additionally obtain angular information, the following solutions are known. In a radar application on, say, a ship, a directive transmit and/or a directive receive antenna may be mechanically rotated. Alternatively, in other radar units, transmit and/or receive antennas may consist of an array of antenna elements, such that transmit and/or receive 'beams' can be directed in different directions by varying phase offset between antenna elements.
It is known that rather than sequentially scanning in each direction, angular scanning time for radar applications can be minimized by applying multiple-in multiple-out (MIMO) schemes. A dedicated decoder may be employed such that angular information can be retrieved by post-processing of the received signal(s). However, as MIMO requires orthogonal signals to/from individual antenna elements, MIMO cannot be naturally implemented in ABF systems using a single transmit or receive data stream per (sub)panel.
An ABF approach uses a single transmit signal, supplied to all transmit antenna elements simultaneously, with only the phase offset (and sometimes amplitude) set differently per antenna element. Hence, signals transmitted from different elements are fully correlated and cannot have orthogonal coding (required for MIMO applications. Similarly, at the receiver side, an ABF receiver will add signals from all receiver antenna elements into a single data stream (noting that it is only capable of applying phase and amplitude offsets) for subsequent processing. Hence, received signals from antenna elements cannot be processed independently. Therefore, ABF systems have been unable to utilise MIMO techniques, as orthogonal transmission and/or independent processing of received signals is an essential part of MIMO systems.
The paper titled 'A 77 GHz 8RX3TX transceiver for 250 m long range automotive radar in 40 nm CMOS technology', published in the 2020 IEEE Radio Frequency Integrated Circuits Symposium, describes a static random access memory (SRAM) that is used for storage of a radar operating sequence (not configured for ABF). US 10,771,124 B2, titled 'Virtual beam steering MIMO radar' describes virtual beam steering using N transmit and M receive antennas.

Summary of the invention

The present invention provides a communication unit, and a circuit that supports dual-mode analog beam former and a method therefor, as described in the accompanying claims. Specific embodiments of the invention are set forth in the dependent claims. These and other aspects of the invention will be apparent from and elucidated with reference to the embodiments described hereinafter.

Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.

    FIG. 1 illustrates a simplified drawing of a communication unit adapted to support a communication mode of operation and a radar mode of operation in example embodiments of the present invention.

FIG. 2 illustrates a simplified drawing of the antenna element configuration components of an OFDM communication unit adapted to support both a communication mode of operation and a radar mode of operation, in accordance with some example embodiments of the present invention.

FIG. 3 illustrates an Equivalent Isotropic Radiated Power (EIRP) as function of beam angle in sixteen steps for an array of sixteen transmit elements, in accordance with some example embodiments of the present invention.

FIG. 4 illustrates a simplified drawing of a transmit and receive configuration of an OFDM unit adapted to support both a communication mode of operation and particularly a ST-CDMA MIMO radar mode of operation, in accordance with some example embodiments of the present invention.

FIG. 5 illustrates an example of a dual-mode analog beam former circuit for coupling to a plurality of antennas and comprising a beam-index-look-up table (LUT), according to a first example mode of operation of the invention.

FIG. 6 illustrates an example beam-index LUT with a graph illustrating a radiation pattern of the dual-mode analog beam former circuit of FIG. 4 for a communication mode of operation and an example beam-index LUT for a ST-CDMA MIMO radar mode of operation, according to an example of the invention.

FIG. 7 illustrates one example of a flowchart of a method of beam-forming using a beam-index LUT that is configurable for dual-mode operation, according to example embodiments of the invention.

Detailed description

Examples of the present invention provide a dual-mode analog beam forming circuit comprising: an input for receiving an input modulated radio frequency, RF, signal; a beam-index-look-up table, LUT; a RF splitter for splitting the input modulated RF signal into a plurality of modulated RF signals. A gain adjustment circuit comprises a plurality of gain adjustment elements, wherein the plurality of gain adjustment elements are respectively coupled to the beam-index LUT and a gain of each gain adjustment element is individually controlled by the beam-index LUT ; and a phase adjustment circuit comprises a plurality of phase adjustment elements, wherein the plurality of phase adjustment elements are respectively coupled to the beam-index LUT and a phase of each phase adjustment element is individually controlled by the beam-index LUT. The beam-index LUT is configured to support two modes of operation, comprising: an analog beam forming communication mode of operation; and a slow-time modulation radar mode of operation.

In this manner, an analog beam former circuit (which may be an ABF IC) having a beam-index LUT is capable of establishing a communication link (e.g., cellular) mode of operation and a radar mode of operation, for example operated in a slow-time code division multiple access (ST-CDMA) multiple-in multiple-out (MIMO) mode of operation, using the same beam-index LUT and same antennas/antenna array and same gain and phase adjustment circuits/components. Herein, the use of ST-CDMA encompasses scenarios where the CDMA code bit length is much larger than the sample rate of the data signal. Slow-time CDMA refers to the fact that the CDMA coding is at relatively low speed (only from symbol-to-symbol and not within symbols). Furthermore, herein, the use of ABF circuits encompasses multiple transmit or receive antenna elements that process the same data/RF stream, except that the phase and amplitude of each channel can be adjusted. This allows for adapting the array spatial radiation pattern.

Examples of the invention are described with regard to a cellular communication mode of operation and a ST-CDMA MIMO mode of operation, although it is envisaged that these form two possible examples of potential implementation modes of operation. In some examples, the circuit may be implemented using discrete components and circuits, whereas in other examples the circuit may be formed in integrated form in an integrated circuit. Because the illustrated embodiments of the present invention may, for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention.

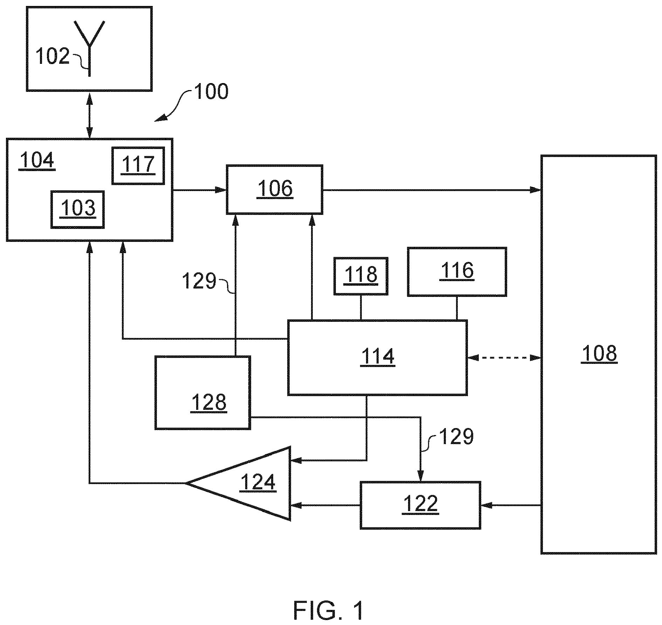

Referring now to FIG. 1, a block diagram of a wireless communication unit 100 and mode of operation, adapted in accordance with some example embodiments of the invention, is shown. In practice, purely for the purposes of explaining embodiments of the invention, the wireless communication unit is described in terms of a wireless base station communication unit configured to support the LTE™, fourth generation (4G) or fifth generation (5G) or indeed sixth generation (6G) communication standards. The wireless communication unit 100 contains an antenna arrangement 102, for radiating signals and/or for receiving transmissions. The antenna arrangement 102 of such base stations operating in a millimetre frequency range contain, say, at least 32 but typically 64... 1024 antenna elements, typically in a form of an antenna array. The antenna arrangement 102 of such base stations is directly connected to a power amplifier 124 and a receiver low noise amplifier (LNA) in the receiver front-end circuitry 106. Although the wireless communication unit 100 is described with reference to (typically) 4G or 5G architectures, it is envisaged that the communication unit employing the concepts herein described may employ other architectures. Furthermore, for example, other 4G or 5G architectures may employ automatic gain circuits that are distributed throughout the whole of the receiver chain.

One or more receiver chains, as known in the art, include(s) receiver front-end circuitry 106 (effectively providing amplification, filtering and intermediate or base-band frequency conversion and analog-to-digital conversion). In some examples, the antenna arrangement may be an antenna array that includes multiple antenna elements that each provide a receive path carrying a received signal to the receiver front-end circuitry 106. The receiver front-end circuitry 106 is coupled to a signal processing module 108 (generally realized by a Digital Signal Processor (DSP)). A skilled artisan will appreciate that the level of integration of receiver circuits or components may be, in some instances, implementation-dependent.

A controller 114 maintains overall operational control of the wireless communication unit 100. The controller 114 is coupled to the receiver front-end circuitry 106, amplifier 124, dual-mode analog beam former circuit 104 and the signal processing module 108. In some examples, the controller 114 is also coupled to at least one memory device 116 that selectively stores data relating to operating functions of the communication unit. A timer 118 is operably coupled to the controller 114 to control the timing of operations (e.g., transmission or reception of time-dependent signals) within the wireless communication unit 100.

For completeness, the wireless communication unit 100 has a transmit chain that includes digital-to-analog converter (DAC) and up-conversion (or mixer) circuitry 122 and a power amplifier 124 coupled to the antenna arrangement 102, which may comprise for example an antenna array, or plurality of antennas. The transmitter and up-conversion (or mixer) circuitry 122 and the power amplifier (PA) 124 are operationally responsive to the controller 114.

In some examples, the PA 124 and/or DAC and up-conversion (or mixer) circuitry 122 may include multiple transmit paths carrying a transmit signal to the antenna 102 (or antenna array). Frequency generation circuit 128 is operably coupled to the receiver front-end circuitry 106 and the DAC and up-conversion (or mixer) circuitry 122 and arranged to provide local oscillator (LO) signals 129 thereto.

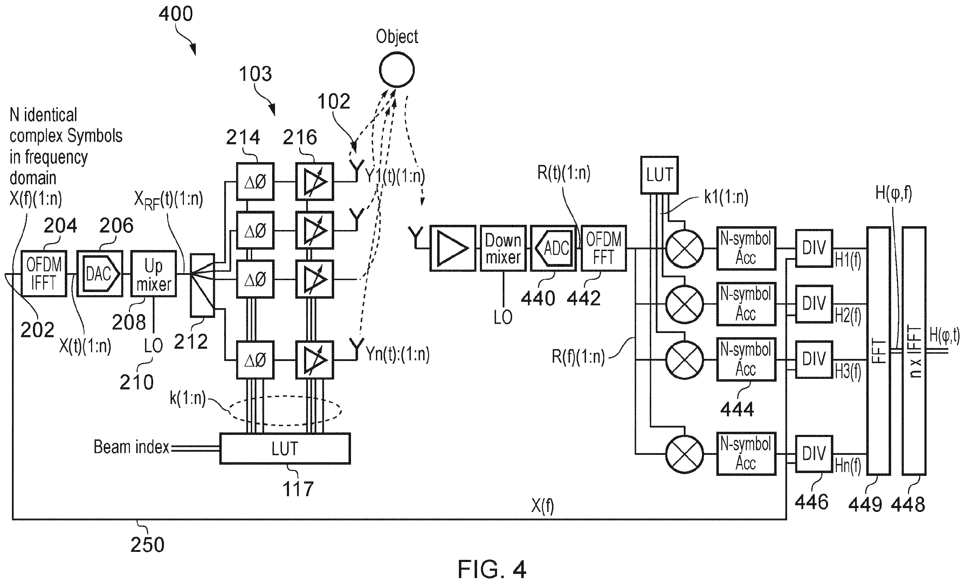

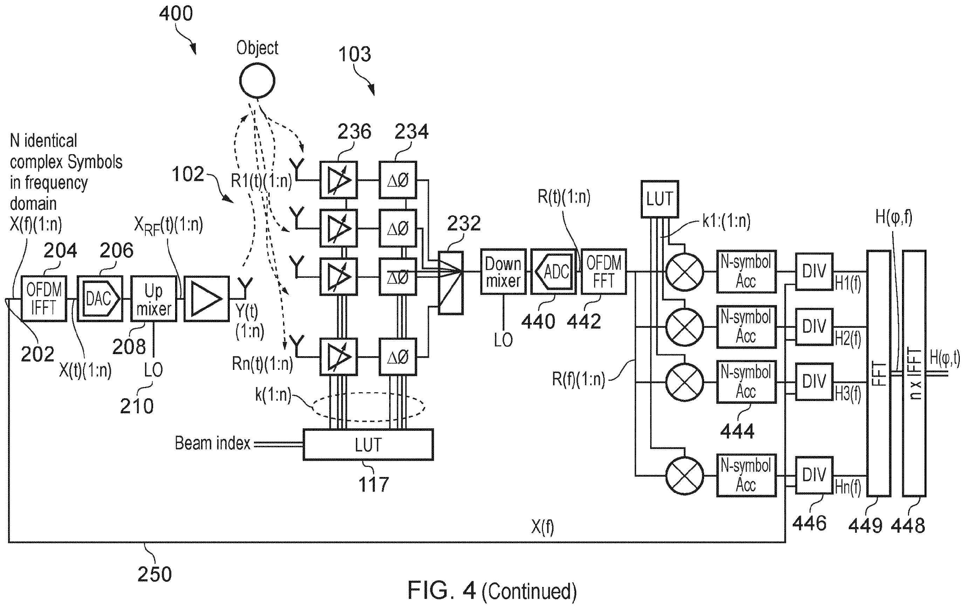

In example embodiments, a dual-mode analog beam former (ABF) circuit 104 is operably coupled to the PA output and the receiver front-end circuitry 106. In example embodiments, the low noise amplifier (LNA) in receiver front-end circuitry 106 and PA 124 are shifted through the dual-mode ABF circuit 104 to directly connect to the antenna. The dual-mode ABF circuit 104 is arranged to form antenna beams for transmit and receive signals according to the architecture of FIGs 4 to 5. The dual-mode ABF circuit 104 comprises gain and phase adjustment circuit(s) 103 and a single beam-index look-up table (LUT) 117.

In some example embodiments, the dual-mode ABF circuit 104 and gain adjustment circuit(s) and phase adjustment circuit(s) 103 and single beam-index LUT 117 may be configurable and provided in an analog beam former integrated circuit (IC). In some examples, the dual-mode ABF circuit 104 and gain adjustment circuit(s) and phase adjustment circuit(s) 103 and single beam-index LUT 117 may be configurable and provided in a radio frequency (RF) module with antenna elements 102 or an antenna array. Notably, in accordance with examples of the invention, the analog beam former IC or the RF module is configured to be re-configurable to support both a wireless cellular application as well as a radio frequency radar application mode of operation or in some examples a hybrid cellular communication-radar mode of operation operation.

Referring now to a second mode of operation for a radar mode of operation, in accordance with some examples of the invention. Purely for explanatory purposes, the unit 100 operating in radar mode is described as operating at MMW frequencies. Examples of the invention are described in terms of radar processing based on an orthogonal frequency division multiplex (OFDM) transmit and receive system, which allows for a logical integration of radar and communication components and circuits. However, it is envisaged that alternative approaches that do not use OFDM may also benefit from the concepts herein described.

The radar unit 100 contains one or several antennas 102 for receiving radar signals and one or several antennas 102 for transmitting radar signals created by the DSP 108, digitizing and up-converting the signals in transmitter circuit 122 and amplifying the radar transmit signals in power amplifier 124. The number of antennas used may depend on the number of radar receiver and transmitter channels that are implemented in a given radar device. One or more receiver chains, as known in the art, include receiver front-end circuitry 106, effectively providing amplification, frequency conversion (operably coupled to LO frequency generation circuit 128), filtering, and finally an analog-to-digital conversion. In some examples, a number of such circuits or components may reside in circuit 106, dependent upon the specific selected architecture. The receiver front-end circuitry 106 is coupled to the signal processing module 108 (generally realized by a digital signal processor (DSP)). The DSP will process the received and digitized symbols with known transmitted symbols to derive the radar information on for example range and velocity of detected objects. A skilled artisan will appreciate that the level of integration of receiver circuits or components may be, in some instances, implementation-dependent. The controller 114 maintains overall operational control of the radar unit 100.The controller will also control the transmitted and received radiation pattern by driving the LUT 117 in dual-mode ABF circuit 104. In some examples, the controller and is also coupled to a memory device 116 that selectively stores operating regimes, such as decoding/encoding functions, and the like.

In some example embodiments, the dual-mode ABF circuit 104 and gain and/or phase adjustment circuit(s) 103 and single beam-index LUT 117 may be configurable and provided in an analog beam former integrated circuit (IC). In some examples, the dual-mode ABF circuit 104 and gain and/or phase adjustment circuit(s) 103 and single beam-index LUT 117 may be configurable and provided in a radio frequency (RF) module with antenna elements 102 or an antenna array. Notably, in accordance with examples of the invention, the analog beam former IC or the RF module is configured to be re-configurable to support both a wireless cellular application as well as a radio frequency radar application mode of operation or in some examples a hybrid cellular communication-radar mode of operation.

In accordance with examples of the invention, a single beam-index LUT is provided that is connected to each of a plurality of phase adjustment circuits and gain adjustment circuits 103 with the single beam-index LUT 117 being configured to support at least two modes of operation

(i) a first mode of operation for setting a beam direction for an ABF communication mode, for example for use in the wireless communication unit 100 of FIG. 1; and

(ii) a second mode of operation that is used for setting a radiation pattern for a slow-time MIMO modulation scheme, for example a CDMA code sequence, say in a ST-CDMA radar mode, for example for use in the radar mode of FIG. 1.

In some examples, the controller 114, may be configured to transition between the communication mode of operation and the ST-CDMA-MIMO radar mode of operation by selecting a new beam-index LUT 117 value. In this manner, the communication unit is able to substantially seamlessly transition between the two modes of operation as both modes use a number (e.g., a plurality) of same circuit components for both the communication mode of operation and the ST-CDMA-MIMO radar mode of operation and that both modes may be configured to comply with the same timing framework, e.g., keep the same clock frequencies, symbol lengths, etc. for both modes.

In some example embodiments, the dual-mode analog beam former circuit supports a radar application that comprises a slow-time phase and amplitude modulation technology, where slow-time modulation technology supports orthogonal coding for a transmitted and orthogonal decoding for a receiver. In one example, the code-split in a time domain may employ a slow-time code division multiple access (ST-CDMA) modulation technique in a multiple-in multiple-out (MIMO) communication system implemented using an analog beam former antenna array. In this manner, the updating of the beam-index LUT with CDMA codes on a scale of micro-seconds per code bit is feasible, whereas on scales of picoseconds or nano-seconds is not presently physically feasible. The term 'slow' in example embodiments of the invention encompasses CDMA code that runs at a much lower speed than the bit rate/bandwidth of the communication system, typically Gbits/sec.

A skilled artisan will appreciate that the level of integration of antenna elements, transmitter circuits or components and receiver circuits or components may be, in some instances, implementation-dependent. Clearly, the various components within the wireless unit operating in a communication mode of operation or a radar mode of operation can be realized in discrete or integrated component form, with an ultimate structure therefore being an application-specific or design selection.

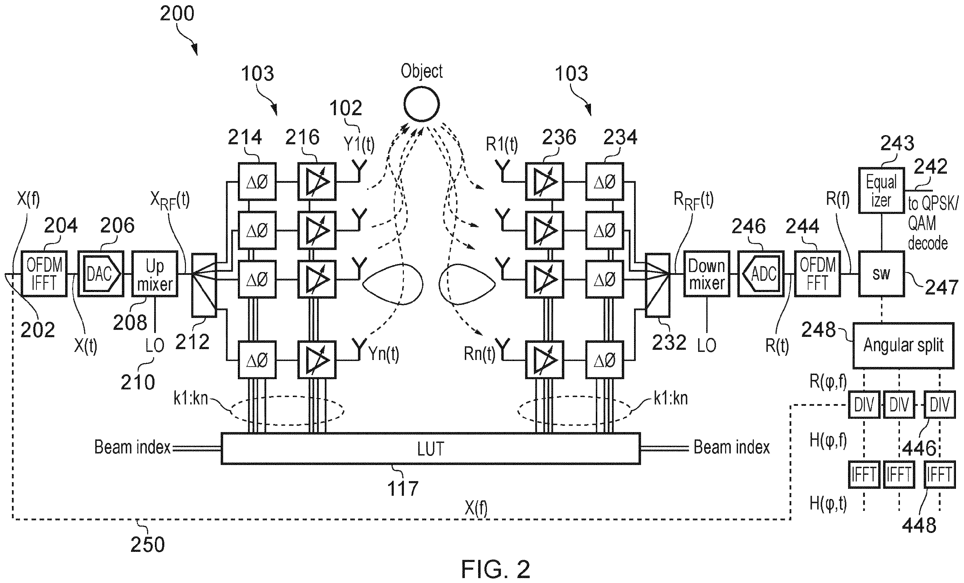

FIG. 2 illustrates a simplified drawing of the antenna element configuration components of an orthogonal frequency division multiplex (OFDM) communication unit 200 adapted to support both a communication mode of operation and a radar mode of operation in example embodiments of the present invention. First, the OFDM communication unit 200 will be described with reference to being adapted to support a communication mode of operation using a dual-mode ABF circuit 104. In a communication mode, the wireless communication unit typically operates in half-duplex, meaning that a base station is operating either in transmit or receive mode at any instant in time. Alternation between transmit and receive in cellular networks is typically on a timescale from 8 ... 1000us.

The OFDM transmitter operation receives a stream of input symbols 202. For each new symbol, the whole process is just repeated. In a communication mode of operation, OFDM symbols are constructed from a number of, for example, quadrature phase shift-keyed (QPSK) or 64-quadrature amplitude modulated (64-QAM) symbols, each of them determining the 'I' and 'Q' amplitude of a particular OFDM subcarrier in a given symbol. Hence, a single OFDM symbol may carry many bits. Because of the mapping on subcarriers, the representation of the symbol is, in fact, in the frequency domain.

An IFFT function 204 transforms each received input OFDM symbol into a time signal. By nature of the IFFT function 204, the number of time samples is exactly the same as the number of subcarriers. As a further step not explained herein, a cyclic prefix may be concatenated at the start of each symbol. The next operation is converting the (complex) digital signal into a (complex=IQ) analog signal in the DAC 206 and upconverting to a double-sideband RF signal (no longer complex) in an up-mixer 208. The up-mixer 208 uses the Local Oscillator (LO) signal 210 as a time reference. When an n-channel analog beam former is being used, the upconverted RF signal is split into n copies using RF splitter 212. At least the phase (using phase adjustment circuit 214) and potentially the amplitude (using amplitude adjustment circuit 216) of each signal can be adjusted, typically on a symbol-by-symbol basis or on a multiple of symbols basis.

This allows the beam direction to be updated. Before supplying the signals Y1...Yn to the antennas 102, a power amplifier is inserted (not illustrated in this figure for clarity purposes only).

The implementation of the beam control is achieved by means of the single beam-index LUT 117 (or memory). For each new beam direction, a lot of antenna elements need to be controlled with many control bits, even if the number of beam directions is limited. To prevent massive control traffic, a single beam-index LUT 117 is a preferred solution.

At a receive side, the signal processing is in reversed sequence. The received antenna signals R1... Rn are first amplified in a low noise amplifier (LNA) (again not illustrated in this figure for clarity purposes only). Next, a phase (using phase adjustment circuit 234) and potentially the amplitude (using amplitude adjustment circuit 236) can be modified to control the maximum sensitivity direction of the received beam. After summing up the signals in RF combiner 232, the RF signal is down-converted to complex IQ baseband signals before being sampled in the ADC 246. After the ADC 246, the cyclic prefix may be removed (not shown). After FFT in OFDM FFT function 244, the frequency representation of the received symbols is retrieved. In communication mode, the switch 247 passes the signal to the equalizer 243. Since the gain and phase of each subcarrier signal typically suffers various offsets from losses and various reflections between transmit and receive antenna, correction by an equalizer 243 is required before QPSK or QAM symbols 242 can be determined successfully.

Secondly, the OFDM communication unit 200 will be described with reference to being adapted to support a ST-CDMA MIMO radar mode of operation using the dual-mode ABF circuit 104. Here, rather than data symbols, the transmitter may transmit dedicated 'sense' symbols. For given scanning angle, the receiver will compare the frequency spectrum of the received signal R(f) from FFT transform in 244 and switch 247 with the known spectrum of the transmitted signal X(f) obtained via path 250. A division function contained in unit 446 then yields the channel transfer function in the frequency domain H(f). Note that a division function implies that potentially any waveform ('X') to form dedicated 'sense' symbols can be used. However, in some examples, preferably the waveform contains all frequency components, while the peak-to-average ratio of the X(t) signal is kept as low as possible. It is noted that a FMCW waveform is fully compliant to this approach, but it is not an essential radar technique to use.

After applying IFFT transformation 448 on H(f), the channel pulse response H(t) can be obtained. The distance to the objects in the field now shows as individual pulses in this H(t) signal. The delays represent the range; the amplitudes are a measure for their size. It is noteworthy that the equalizer 243 (present for communication mode of operation) is not used for the radar mode of operation, as it would exactly remove the channel information that is required for sensing.

In order to derive angular resolution on the radar, the decoding of the received signal R(f) into radar data H(t) is to be repeated for different angles. An angular split circuit 248 serves to separate the received signal for different angles using ST-CDMA coding in dual-mode ABF circuit 104 and decoding in angular split circuit 248. Its operation will be described later.

In some examples, e.g., for operation in a mono-static radar mode, the transmitter and receiver circuits must be active at the same time. In order to prevent blocking of the receiver by the transmit signal, in some examples of the invention, this is preferably achieved by using separate antenna arrays for transmit and receive functions.

Typically, during beam discovery mode while setting up a communication channel, the LUT sequentially drives the transmitted or received beam over a series of scan angles. In some examples, the beam-index LUT 117 may be configured to control ABF for an alternative beam discovery mode, in a similar manner as the ST-CDMA radar scanner mode as described herein.

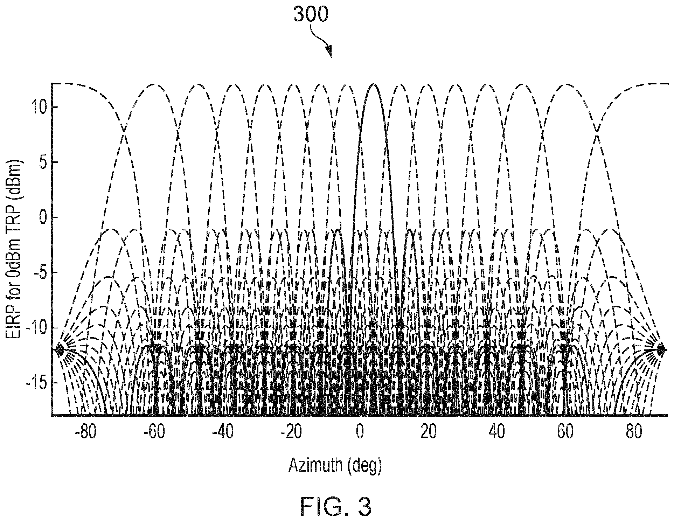

In a communication mode, either the transmitter, the receiver or both are using a directed beam that can be measured as such at any point in time. Example radiation patterns, in 16 coarse steps in a 16-element array and normalized to Equivalent Isotropic Radiated Power (EIRP) for 0dBm Total Radiated Power (TRP) are shown in FIG. 3

Referring now to FIG. 4 a simplified drawing of an OFDM unit 400 adapted to support both a communication mode of operation and particularly a ST-CDMA MIMO radar mode of operation in the transmitter, in accordance with some example embodiments of the present invention.

The following paragraphs focus on an example of ST-CDMA implementation only for the transmit side. However, it is envisaged, as will be appreciated by a skilled person, that the principles equally apply for the receive side, as shown in FIG. 4.

For ST-CDMA sensing, the transmitter will repeat the same sense symbol as many times as the number of transmit antennas. Note that in the frequency domain, the implementation of the amplitude/phase modification by CDMA coding for each channel is a simple multiplication by a complex vector 'K'. As the ABF operates in the time domain, fortunately, an alternative implementation is employed in examples of the invention, namely the control obtainable by the beam-index LUT that is used for beam control. Hence, in examples of the invention, the phase and amplitude control signals are reused, as well as the beam LUT. The LUT just needs to be extended by as many entries as there are antenna elements for ST-CDMA sensing.

Let us assume that antenna 102 comprises an antenna array of $1 \times N$ in the direction of the intended scanning angle. In practice however, the antenna array may consist of 'M'*'N' elements, with scanning angle in the direction of the 'N' elements. In such a case, all 'M' elements in the same column will receive the same CDMA control signal.

Therefore, for convenience, we will still assume 'N' antenna elements for the operation.

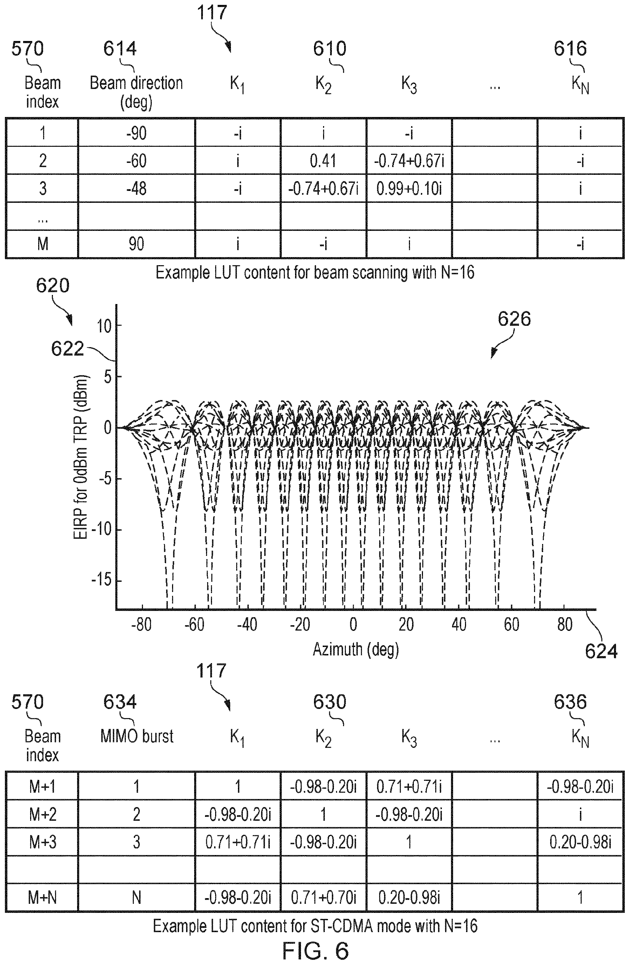

At the receive side, the signal processing is the same as for communication mode of operation, until after the time-frequency Fast Fourier Transform (FFT) 442, located after the analog-to-digital conversion in ADC 440. At that point, the frequency spectrum of the received signal is obtained. As stated earlier, applying the CDMA code goes most easily by simple multiplications in the frequency domain. Therefore, the CDMA radar receiver in this example contains an array of multipliers, effectively implementing a matched filter and supplied by the proper CDMA codes (each multiplier using a single row from the table in FIG. 6), towards each accumulator 444.

After the accumulators 444, after every Nth symbol (when the full ST-CDMA sequence has passed), there is a clean frequency signal on each of the 'N' individual signal paths. Thus, having the clean frequency signal on each of the 'N' individual signal paths, it is possible to derive the 'N' channel transfer functions $H_1(f)...H_N(f)$ by dividing each of them by the transmitted spectrum X(f) in dividers 446. In this manner, in order to determine the channel transfer function in a single desired direction (effectively beam-pointing), examples of the invention just add $H_1(f)... H_N(f)$ with a certain progressing phase offset from first to last H(f). Note that this is equivalent to what the phase settings inside the ABF for analog beam forming would do, except that there is no 'physical beam' this time in the ST-CDMA MIMO radar mode of operation.

In another more elegant implementation, rather than such an addition circuit, it is envisaged that an additional FFT 449 (of length N) may be run over the channel transfer functions from the different channels, yielding a full angular scan $H(\varphi,f)$ as result, which provides a channel frequency response H(f) per angle. Similarly, as discussed with simple ABF radar, the next operation would be to run an inverse FFT (IFFT) 448 over the frequency content, separately for each angle. This will reveal the desired pulse responses per angle $H(\varphi,t)$. At this point, we are able to identify objects ranges (showing as delay in the pulse response) as function of the scanning angle.

As a further operation in some examples, sense symbols and full ST-CDMA sequences may be regularly repeated. In this example, operating an FFT over the samples of $H(\varphi,t)$ over a series of repeated transmissions reveals the target object velocity $H(\varphi,v)$.

As explained earlier, FIG. 3 illustrates an Equivalent Isotropic Radiated Power (EIRP) as function of beam angle 300 in sixteen steps for an array of sixteen transmit elements, in communication mode. FIG. 6, shows the EIRP one would achieve in 16 sequential steps when using ST-CDMA in radar mode. In this radiation pattern, there are no narrow pencil beams detectable, as the algorithm only produces virtual beams after the described post-processing. Thus, following post-processing on the ST-CDMA MIMO received signal the directly derived directivity information represents only a virtual beam.

Thus, in contrast to known ABF techniques for a communication mode of operation, examples of the present invention do not just use the beam-index LUT 117 to set another static direction for the beam for the radar mode. In contrast, examples of the present invention employ a sequence of orthogonal phase settings to the individual antenna elements that makes it possible to derive directivity information by means of post-processing of the received signals, thereby making the technique additionally suitable to support a radar mode of operation (even though a clear beam radiation pattern cannot be observed).

Thus, as stated, in ST-CDMA MIMO, the sense symbol is repeated as many times as the number of paths to be evaluated, but for each new symbol and in each transmit or receive path the phase and optionally amplitude of each symbol, may be altered using a special code sequence. In particular, some examples use a code sequence with a sequence length equal to the number of antenna elements N, such that it exhibits a narrow auto-correlation function. Such codes are known from the literature as pulse-compression codes'. Some known examples are the p3 and the p4 code sequences, given by:

$$K_i = \exp(j*(\pi/N*(i-1)^2) \qquad [1]$$

and

$$K_i = \exp(j*(\pi/N*(i-1)^2 - \pi*(i-1)) \qquad [2]$$

with index i running from 1 to code length N.

For convenience, the phase shifts and amplitude changes in the frequency domain have been denoted as a complex multiplication per symbol and per channel by a factor $K_i$. The same sequence is then applied to every channel, but for each channel the code sequence is shifted by '1' symbol position. The code for step i and channel k is then given by:

$$K_{i,k} = \exp(j*(\pi/N*(mod(i-k,N))^2 - \pi*mod(i-k,N)) \qquad [3]$$

Table 117 in FIG. 6 shows the 'K' factors applied in case of p4 coding: the rows show the sequences per channel, the columns show the sequences per symbol.

We now consider that if one passes the received ST-CDMA signal (being a sum of all the channels) through a matched filter, that exactly repeats the complex multiplication using the sequence of one particular channel (one of the rows in the table), and averages over the code length of N symbols results, it is possible to almost perfectly retrieve the signal transmitted and received in that particular channel. Depending on the precise auto-correlation properties of the compression code, only a minor disturbance from signals will leak from the other channels. As the signal that was transmitted is known, it is then possible to derive the transfer function through the radio transmission from particular transmit antenna to receive antenna. Obviously, by using N matched filers in parallel, each with their properly shifted code sequence (proper row from table in LUT 117), after N symbols, the N unique transfer functions can be retrieved.

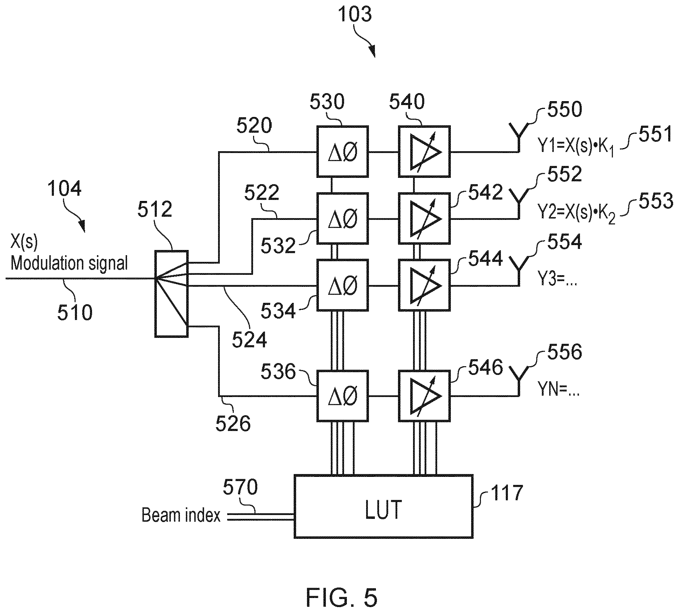

FIG. 5 illustrates an example of a dual-mode analog beam former circuit 103 for coupling to a plurality of antennas 550, 552, 554, 556, which may be in a form of an antenna array, and comprising a single beam-index LUT 117, according to examples of the invention. FIG. 5 shows a transmit mode of operation, whereas it is envisaged that the same components can be used in a reverse direction for a received signal in a receive mode of operation. The dual-mode ABF circuit 104 comprises an input modulated radio frequency (RF) signal 510 that is input to a RF splitter 512 to provide the same input signal to a number of communication channels 520, 522, 524, 526. Each channel comprises a phase adjustment element 530, 532, 534, 536 in a phase adjustment circuit arranged to receive the input modulated RF signal 510 and respectively adjust the phase of the input modulated RF signal 510 according to phase values provided by the single beam-index LUT 117 to produce phase-adjusted input modulated RF signals. The phase-adjusted input modulated RF signals are respectively input to a gain adjustment element 540, 542, 544, 546 in a gain adjustment circuit arranged to receive the phase-adjusted input modulated RF signal and respectively adjust the gains of the phase-adjusted input modulated RF signal 510 according to gain values provided by the single beam-index LUT 117 to produce gain and phase-adjusted input modulated RF signals. The gain and phase-adjusted input modulated RF signals are then input to respective antennas 550, 552, 554, 556 and output signals 551, 553 ... are radiated.

Although this example architecture shows a phase adjustment circuit 530, 532, 534, 536 followed by a gain adjustment circuit 540, 542, 544, 546, it is envisaged that in other implementations the concepts herein described can be equally supported by a gain adjustment circuit 540, 542, 544, 546 followed by a phase adjustment circuit 530, 532, 534, 536.

The single beam-index LUT 117 receives a beam-index control signal 570 that provides a pointer into the LUT that identifies a desired pre-programmed phase and gain for each of the phase adjustment circuits 530, 532, 534, 536 and a gain adjustment circuits 540, 542, 544, 546 to ensure that the desired beam angle (azimuth and/or elevation) can be configured by the totality of the antennas 550, 552, 554, 556 or by an antenna array. Thus, the beam-index LUT contains an entry for every possible radiation pattern, which comprises both pencil beams for communication as well as ST-CDMA radiation patterns for radar (that do not exhibit a clear directed beam beam). In this manner, the respective outputs from the respective gain and/or phase circuit can be independently controlled.

In some examples of the invention, dedicated single beam-index LUT entries may be used in a radar mode of operation, which may be provided from the same processor (or equivalent to a different processor from logical point of view). In some examples of the invention, a timing mechanism to synchronise CDMA codes may also be applied. In some examples of the invention, if these modes are set up correctly, communication mode and radar cycles may be configured to alternate fluently.

For every beam-index entry, the beam-index LUT sets the phase and amplitude levels (based on a complex factor 'K') for every antenna feed, such that the transmit or receive radiation pattern can be shaped as desired. Optionally, values of 'K' can be set to additionally suppress interference (null the beam) from a particular angle, as known in the art.

For example, it is envisaged that in some examples, the single beam-index LUT 117 may be configured to contain 256, 512,1024 or 2048 entries to support an ABF communication mode.

Although examples of the invention are illustrated with four phase adjustment circuits 530, 532, 534, 536 and four gain adjustment circuits 540, 542, 544, 546 it is envisaged that the concepts herein described can be used with more or less than this number, with four being shown for simplicity purposes only and not to obfuscate the concepts herein described.

Referring now to FIG. 6.FIG. 6 illustrates an example of a portion of the single beam-index LUT 117 comprises beam indices 1...M 570. The example of a portion of the single beam-index LUT 117 includes a beam direction 614 and a range of K values 610 up to $K_N$ 616 This part of the LUT contains example coefficients for operating in communication mode and pencil beams as shown in FIG. 3. FIG.6 also illustrates in graph 620 an EIRP 622 versus azimuth 624 plot 626 in a ST-CDMA radar mode, based on example gain and phase values listed in from LUT 117 indices M+1... M+N and the dual-mode analog beam former circuit of FIG. 4 operating in the second mode of operation. For each phase of the MIMO sequence as listed in 634, a new beam-index 570 is selected and new row of complex K factors (setting gain and phase) 630 (up to a maximum of $K_N$ 636) is applied to the ABF circuit. It is noted that for the same total radiated power (TRP), the EIRP 622 peaks are about 10dB lower. Some examples of the invention take advantage of the fact that radar sensing does not produce high EIRP, at any moment, hence reducing any risk of disturbing other services that may use the same communication bandwidth (e.g., in neighbouring cells).

It is noted that there are a lot of publications are written on the subject of MIMO radar. In its most simple understanding, the concept of MIMO radar is that there are multiple transmit and/or multiple receive antennas, while the transfer function (i.e. the path delay/attenuation from transmit antenna to object and reflection back to receive antenna) from each individual transmit to each individual receive antenna can be uniquely determined. This means that for 'Nt' transmit elements and 'Nr' receive elements, Nt*Nr transfer functions must be known. Processing on those Nt*Nr transfer functions can reveal the angle of the object with respect to the direction of the antenna array. For example, the direct linear sum of all the transfer functions will reveal any reflection of an object at boresight. Summing the functions with a progressing phase shift from element-to-element, if done properly, will reveal any reflections at a particular angle. Rather than calculating a separate sum per viewing angle, actual implementation if by means of FFTs, the bins containing the refection amplitude in a certain scanning angle.

The inventor has identified and appreciated that the enabler for MIMO radar is that one must be able to separate which transfer function comes from which antenna element. The architecture and method proposed herein is suitable for use in analog beam former, and that is to apply a different sequence of phase rotations for every antenna element (noting that phase rotation is a multiplication by complex Ki in the frequency domain). In addition, in some examples, rather than pure phase rotations, amplitudes may also be varied. The processor in the wireless device can then retrieve the individual path transfer functions by multiplying with conjugate of the respective sequences (provided that the sequences are coded orthogonally). Code Division Multiple Access (of same stream with DAC/ADC etc.,) is used to separate the individual path functions. Once the individual functions are known, FFT can be applied to derive the angular information.

For every beam-index entry in say a ST-CDMA sequence, the single beam-index LUT 117 sets the phase and amplitude levels for every antenna feed. When using a 1-dimension (1-D) linear antenna array, a number of indices 'M' in the single beam-index LUT 117 is typically the product of the number of transmit and receive elements. Alternatively, when using a 2-D antenna array, the number of indices M is typically the product of the number of columns (for azimuth scanning) or rows (when elevation scanning) in the transmit and receive arrays. Alternatively, when using a 2-D antenna array, the number of indices M is typically the product of the number of columns (for azimuth scanning) or rows (when elevation scanning) in the transmit and receive arrays. The same signal (burst) 510 is repeated 'M' times. For every M, the single beam-index LUT 117 sets the phase of each phase adjustment circuit 530, 532, 534, 536 and amplitude of each gain adjustment circuit 540, 542, 544, 546 (based on a complex factor 'K') for each antenna feed to ensure that the desired beam angle (azimuth and/or elevation) can be configured by the totality of the antennas 550, 552, 554, 556 or by an antenna array. In accordance with examples of the invention, subsequent values of 'K' (i.e., sequence index 1...M) are mutually orthogonal. In this manner, 'K' values for different elements (1D array) or columns/rows (2D array) are mutually orthogonal.

It is envisaged that in some examples, the single beam-index LUT 117 may be configured to contain 256, 512,1024 or 2048 entries to support an ABF communication mode, and furthermore the beam-index LUT may be configured to additionally contain an order of 4 to 32 entries, over and above those intended to support the ABF communication mode of FIG. 3, in order to support a MIMO radar mode of operation. Alternatively, it is envisaged that in some examples, a few extreme entries from the communication mode of FIG. 3 may be sacrificed (e.g., addressing extreme elevation + azimuth angle).

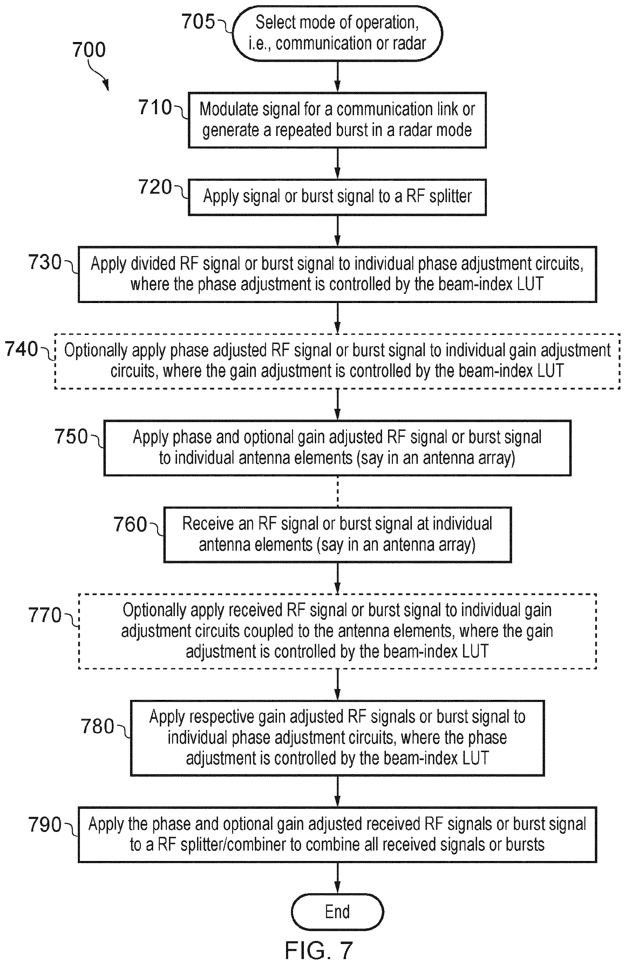

FIG. 7 illustrates one example of a flowchart 700 of a method of beam-forming using a beam-index LUT that is configurable for dual-mode operation, according to example embodiments of the invention. At 705, the method optionally selects a mode of operation, i.e., communication ABF or a ST-CDMA MIMO radar mode of operation. At 710, an input modulated signal is optionally applied for a communication link or a repeated burst optionally generated in a radar mode of operation.

In a transmitter mode, at 720, the input signal or burst signal is applied to a RF splitter (/RF combiner). At 730, the RF combined RF signal or divided RF signal or divided burst signal is applied to individual phase adjustment circuits on a communication channel, where the phase adjustment applied by the individual phase adjustment circuits is controlled by the beam-index LUT. At 740, each respective phase adjusted RF signal or burst signal may be optionally applied to individual gain adjustment circuits, where the gain adjustment is controlled by the beam-index LUT. Although this example flowchart shows a phase adjustment followed by a gain adjustment, it is envisaged that in other implementations the concepts herein described can be equally supported by a gain adjustment followed by a phase adjustment circuit, noting that the gain adjustment is optional in a radar mode of operation. The phase and gain adjusted RF signal or burst signal are then applied, at 750, to individual antenna elements (say in an antenna array).

In a receive mode of operation, at 760, an RF signal or burst signal is received at individual antenna elements (say in an antenna array). At 770, the received RF signal or burst signal is applied to individual gain adjustment circuits, coupled to the antenna elements, where the gain adjustment of each of the individual gain adjustment circuits or elements is controlled by the beam-index LUT. At 780, the respective gain adjusted RF signals or burst signal is applied to individual phase adjustment circuits, where the phase adjustment of the individual phase adjustment circuits or elements is controlled by the beam-index LUT. At 790, the phase and gain adjusted received RF signals or burst signal are applied to a RF splitter/combiner to combine all received signals or bursts for subsequent demodulation and decoding.

In the foregoing specification, the invention has been described with reference to specific examples of embodiments of the invention. It will, however, be evident that various modifications and changes may be made therein without departing from the scope of the invention as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality. Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit (IC) or within a same device. For example, the single IC may be configured to contain the single beam-index LUT 117 and the antenna array, or in other implementations the single beam-index LUT 117 and the antenna array may be implemented as separate modules within a device.

Alternatively, the circuit and/or component examples may be implemented as any number of separate integrated circuits or separate devices interconnected with each other in a suitable manner. Also, for example, the examples, or portions thereof, may implemented as soft or code representations of physical circuitry or of logical representations convertible into physical circuitry, such as in a hardware description language of any appropriate type. It is envisaged, as would be appreciated by a skilled artisan in the wireless communication/radar field, that other modifications, variations and alternatives are also possible. Thus, the specifications and drawings are, accordingly, to be regarded in an illustrative rather than in a restrictive sense and that the protection afforded by the present invention is clarified in the claims. In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

**Claims**

**1.** A dual-mode analog beam forming, ABF, circuit (104) for a communication unit (100) that includes a plurality of individual antenna elements (102), wherein the dual-mode ABF circuit (104) comprises at least one of:

a transmitter having an input for receiving an input modulated radio frequency, RF, signal and a RF splitter (212, 512) for splitting the input modulated RF signal into a plurality of modulated RF signals that are applied to respective antenna elements of the plurality of individual antenna elements (102); and

a receiver having an input for receiving a plurality of input modulated radio frequency, RF, signals from respective antenna elements of the plurality of individual antenna elements and a RF combiner (232) for combining the plurality of input modulated RF signals into a modulated RF signal;

wherein the dual-mode ABF circuit (104) further comprises:

a beam-index look-up-table, LUT, (117) operably coupled to the at least one of the transmitter and the receiver, configured to support ABF for a communication mode of operation and configured to support signal processing in a slow-time code division multiple access, ST-CDMA, multiple-in, multiple out, MIMO, radar mode of operation; and

wherein at least one of the transmitter and the receiver comprises a phase adjustment circuit (103, 214, 234) comprising a plurality of phase adjustment elements (530, 532, 534, 536), wherein the plurality of phase adjustment elements (530, 532, 534, 536) is respectively coupled to the beam-index LUT (117) and a phase of each phase adjustment element (530, 532, 534, 536) is individually controlled in accordance with a pre-programmed value in the beam-index LUT (117) dependent upon the mode of operation.

2. The dual-mode ABF circuit (104) of Claim 1 wherein the received input modulated RF signal is modulated by a sequence of orthogonal phase settings applied to individual antenna elements and the receiver comprises a processor configured to perform post-processing on a ST-CDMA MIMO received signal and directly derive directivity information of a beam in a desired direction.

3. The dual-mode ABF circuit (104) of Claim 2 wherein, following post-processing on the ST-CDMA MIMO received signal, the directly derived directivity information represents only a virtual beam.

4. The dual-mode ABF circuit (104) of any preceding Claim further comprising a gain adjustment circuit (103, 216, 236) comprising a plurality of gain adjustment elements (540, 542, 544, 546), wherein the gain adjustment elements of the plurality of gain adjustment elements are respectively coupled to the beam-index LUT (117) and a gain of each gain adjustment element is individually controlled by the beam-index LUT (117).

5. The dual-mode ABF circuit (104) of any preceding Claim wherein the beam-index LUT comprises a plurality of values that at least match a number of antenna elements in a scanning direction when supporting the ST-CDMA MIMO radar mode of operation.

6. The dual-mode ABF circuit (104) of any preceding Claim wherein the beam-index LUT (117) is configured to support at least one of: transmitter pencil beam forming for the communication mode of operation, receiver pencil beam forming for the communication mode of operation, radar sensing in the ST-CDMA MIMO, radar mode of operation.

7. The dual-mode ABF circuit (104) of any preceding Claim wherein the beam-index LUT (117) is configured in the ST-CDMA MIMO mode of operation to support ABF for a communication mode when employed to identify an angle of a received beam during beam discovery.

8. The dual-mode ABF circuit (104) of any preceding Claim wherein a number of the plurality of phase adjustment elements is a same number as a number of antenna elements in the plurality of individual antenna elements.

9. The dual-mode ABF circuit (104) of any preceding Claim wherein the communication unit (100) uses a number of same circuit components for both the communication mode of operation and the ST-CDMA-MIMO radar mode of operation and that both modes of operation comply with a same timing framework, and the communication unit (100) comprises a controller (114) coupled to the beam-index LUT (117) wherein the controller is configured to transition between the communication mode of operation and the ST-CDMA-MIMO radar mode of operation by selecting a new beam-index LUT (117) value.

10. A method (700) of supporting a dual mode of operation in a communication unit (100) comprising a plurality of individual antenna elements (102) using a dual-mode analog beam forming, ABF, circuit (104), the method comprising at least one of:

receiving an input modulated radio frequency, RF, signal in a transmitter and splitting the input modulated RF signal into a plurality of modulated RF signals that are applied to respective antenna elements of the plurality of individual antenna elements; and

receiving in a receiver a plurality of input modulated radio frequency, RF, signals from respective antenna elements of the plurality of individual antenna elements and combining the plurality of input modulated RF signals into a modulated RF signal

configuring a single beam-index LUT to support processing in a slow-time code division multiple access, ST-CDMA, multiple-in, multiple out, MIMO, radar mode of operation and to support analog beam forming for a communication mode of operation;

coupling a beam-index-look-up table, LUT, to a plurality of phase adjustment elements in a phase adjustment circuit; and

individually controlling a phase of each phase adjustment element in accordance with a pre-programmed value in the beam-index LUT dependent upon the mode of operation.

11. The method (700) of Claim 10 wherein the received input modulated RF signal is modulated by a sequence of orthogonal phase settings applied to individual antenna elements and the method further comprises:

performing post-processing on the ST-CDMA MIMO received signal; and
directly deriving directivity information of a beam in a desired direction.

12. The method (700) of Claim 11 wherein following post-processing on the ST-CDMA MIMO received signal the directly derived directivity information represents only a virtual beam.

13. The method (700) of any of preceding Claims 10 to 12 further comprising respectively coupling the beam-index LUT (117) to a gain adjustment circuit (216, 236) and individually controlling a gain of each gain adjustment element by the beam-index LUT (117).

14. The method (700) of any of preceding Claims 10 to 13, wherein the beam-index LUT comprises a plurality of values that at least match a number of antenna elements in a scanning direction when supporting the ST-CDMA MIMO radar mode of operation.

15. The method (700) of any of preceding Claims 10 to 14 further comprising configuring the beam-index LUT (117) according to at least one of:

to support transmitter pencil beam forming for a communication mode of operation, receiver pencil beam forming for a communication mode of operation and configured to support radar sensing a ST-CDMA MIMO, radar mode of operation;

in ST-CDMA MIMO mode to support ABF for a communication mode when employed to identify an angle of a received beam during beam discovery.

**Amended claims in accordance with Rule 137(2) EPC.**

1. A dual-mode analog beam forming, ABF, circuit (104) for a communication unit (100) that includes a plurality of individual antenna elements (102), wherein the dual-mode ABF circuit (104) comprises at least one of:

a transmitter having an input for receiving an input modulated radio frequency, RF, signal and a RF splitter (212, 512) for splitting the input modulated RF signal into a plurality of modulated RF signals that are applied to respective antenna elements of the plurality of individual antenna elements (102); and

a receiver having an input for receiving a plurality of input modulated radio frequency, RF, signals from respective antenna elements of the plurality of individual antenna elements and a RF combiner (232) for combining the plurality of input modulated RF signals into a modulated RF signal;

wherein the dual-mode ABF circuit (104) further comprises:

a single beam-index look-up-table, LUT, (117) operably coupled to the at least one of the transmitter and the receiver, configured to support ABF for a communication mode of operation and configured to support signal processing in a slow-time code division multiple access, ST-CDMA, multiple-in, multiple out, MIMO, radar mode of operation; and

wherein at least one of the transmitter and the receiver comprises a phase adjustment circuit (103, 214, 234) comprising a plurality of phase adjustment elements (530, 532, 534, 536), wherein the plurality of phase adjustment elements (530, 532, 534, 536) is respectively coupled to the single beam-index LUT (117) and a phase of each phase adjustment element (530, 532, 534, 536) is individually controlled in accordance with a pre-programmed value in the single beam-index LUT (117) dependent upon the mode of operation.

2. The dual-mode ABF circuit (104) of Claim 1 wherein the received input modulated RF signal is modulated by a sequence of orthogonal phase settings applied to individual antenna elements and the receiver comprises a processor configured to perform post-processing on a ST-CDMA MIMO received signal and directly derive directivity information of a beam in a desired direction.

3. The dual-mode ABF circuit (104) of Claim 2 wherein, following post-processing on the ST-CDMA MIMO received signal, the directly derived directivity information represents only a virtual beam.

4. The dual-mode ABF circuit (104) of any preceding Claim further comprising a gain adjustment circuit (103, 216, 236) comprising a plurality of gain adjustment elements (540, 542, 544, 546), wherein the gain adjustment elements of the plurality of gain adjustment elements are respectively coupled to the single beam-index LUT (117) and a gain of each gain adjustment element is individually controlled by the single beam-index LUT (117).

5. The dual-mode ABF circuit (104) of any preceding Claim wherein the single beam-index LUT comprises a plurality of values that at least match a number of antenna elements in a scanning direction when supporting the ST-CDMA MIMO radar mode of operation.

6. The dual-mode ABF circuit (104) of any preceding Claim wherein the single beam-index LUT (117) is configured to support at least one of: transmitter pencil beam forming for the communication mode of operation, receiver pencil beam forming for the communication mode of operation, radar sensing in the ST-CDMA MIMO, radar mode of operation.

7. The dual-mode ABF circuit (104) of any preceding Claim wherein the single beam-index LUT (117) is configured in the ST-CDMA MIMO mode of operation to support ABF for a communication mode when employed to identify an angle of a received beam during beam discovery.

8. The dual-mode ABF circuit (104) of any preceding Claim wherein a number of the plurality of phase adjustment elements is a same number as a number of antenna elements in the plurality of individual antenna elements.

9. The dual-mode ABF circuit (104) of any preceding Claim wherein the communication unit (100) uses a number of same circuit components for both the communication mode of operation and the ST-CDMA-MIMO radar mode of operation and that both modes of operation comply with a same timing framework, and the communication unit (100) comprises a controller (114) coupled to the single beam-index LUT (117) wherein the controller is configured to transition between the communication mode of operation and the ST-CDMA-MIMO radar mode of operation by selecting a new beam-index LUT (117) value.

10. A method (700) of supporting a dual mode of operation in a communication unit (100) comprising a plurality of individual antenna elements (102) using a dual-mode analog beam forming, ABF, circuit (104), the method comprising at least one of:

receiving an input modulated radio frequency, RF, signal in a transmitter and splitting the input modulated RF signal into a plurality of modulated RF signals that are applied to respective antenna elements of the plurality of individual antenna elements; and
receiving in a receiver a plurality of input modulated radio frequency, RF, signals from respective antenna elements of the plurality of individual antenna elements and combining the plurality of input modulated RF signals into a modulated RF signal
configuring a single beam-index LUT to support processing in a slow-time code division multiple access, ST-CDMA, multiple-in, multiple out, MIMO, radar mode of operation and to support analog beam forming for a communication mode of operation;
coupling the single beam-index-look-up table, LUT, to a plurality of phase adjustment elements in a phase adjustment circuit; and
individually controlling a phase of each phase adjustment element in accordance with a pre-programmed value in the single beam-index LUT dependent upon the mode of operation.

**11.** The method (700) of Claim 10 wherein the received input modulated RF signal is modulated by a sequence of orthogonal phase settings applied to individual antenna elements and the method further comprises:

performing post-processing on the ST-CDMA MIMO received signal; and
directly deriving directivity information of a beam in a desired direction.

**12.** The method (700) of Claim 11 wherein following post-processing on the ST-CDMA MIMO received signal the directly derived directivity information represents only a virtual beam.

**13.** The method (700) of any of preceding Claims 10 to 12 further comprising respectively coupling the single beam-index LUT (117) to a gain adjustment circuit (216, 236) and individually controlling a gain of each gain adjustment element by the single beam-index LUT (117).

**14.** The method (700) of any of preceding Claims 10 to 13, wherein the single beam-index LUT comprises a plurality of values that at least match a number of antenna elements in a scanning direction when supporting the ST-CDMA MIMO radar mode of operation.

**15.** The method (700) of any of preceding Claims 10 to 14 further comprising configuring the single beam-index LUT (117) according to at least one of:

to support transmitter pencil beam forming for a communication mode of operation, receiver pencil beam forming for a communication mode of operation and configured to support radar sensing a ST-CDMA MIMO, radar mode of operation;
in ST-CDMA MIMO mode to support ABF for a communication mode when employed to identify an angle of a received beam during beam discovery.

FIG. 1

FIG. 2

EP 4 270 799 A1

FIG. 3

FIG. 4

EP 4 270 799 A1

FIG. 4 (Continued)

FIG. 5

| 570<br>Beam index | 614<br>Beam direction (deg) | 117<br>$K_1$ | 610<br>$K_2$ | $K_3$ | ... | 616<br>$K_N$ |
|---|---|---|---|---|---|---|
| 1 | -90 | -i | i | -i | | i |
| 2 | -60 | i | 0.41 | -0.74+0.67i | | -i |
| 3 | -48 | -i | -0.74+0.67i | 0.99+0.10i | | i |
| ... | | | | | | |
| M | 90 | i | -i | i | | -i |

Example LUT content for beam scanning with N=16

| 570<br>Beam index | 634<br>MIMO burst | 117<br>$K_1$ | 630<br>$K_2$ | $K_3$ | ... | 636<br>$K_N$ |
|---|---|---|---|---|---|---|
| M+1 | 1 | 1 | -0.98-0.20i | 0.71+0.71i | | -0.98-0.20i |
| M+2 | 2 | -0.98-0.20i | 1 | -0.98-0.20i | | i |
| M+3 | 3 | 0.71+0.71i | -0.98-0.20i | 1 | | 0.20-0.98i |
| | | | | | | |
| M+N | N | -0.98-0.20i | 0.71+0.70i | 0.20-0.98i | | 1 |

Example LUT content for ST-CDMA mode with N=16

FIG. 6

**FIG. 7**

705 — Select mode of operation, i.e., communication or radar

700

710 — Modulate signal for a communication link or generate a repeated burst in a radar mode

720 — Apply signal or burst signal to a RF splitter

730 — Apply divided RF signal or burst signal to individual phase adjustment circuits, where the phase adjustment is controlled by the beam-index LUT

740 — Optionally apply phase adjusted RF signal or burst signal to individual gain adjustment circuits, where the gain adjustment is controlled by the beam-index LUT

750 — Apply phase and optional gain adjusted RF signal or burst signal to individual antenna elements (say in an antenna array)

760 — Receive an RF signal or burst signal at individual antenna elements (say in an antenna array)

770 — Optionally apply received RF signal or burst signal to individual gain adjustment circuits coupled to the antenna elements, where the gain adjustment is controlled by the beam-index LUT

780 — Apply respective gain adjusted RF signals or burst signal to individual phase adjustment circuits, where the phase adjustment is controlled by the beam-index LUT

790 — Apply the phase and optional gain adjusted received RF signals or burst signal to a RF splitter/combiner to combine all received signals or bursts

End

Europäisches
Patentamt

European
Patent Office

Office européen
des brevets

# EUROPEAN SEARCH REPORT

**Application Number**

EP 22 17 1000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/359739 A1 (MATTHEIJSSEN PAUL [NL] ET AL) 18 November 2021 (2021-11-18)<br>* abstract; figures 3-5,10,11 *<br>* paragraph [0001] - paragraph [0041] *<br>* paragraph [0078] - paragraph [0083] *<br>* paragraph [0093] - paragraph [0099] * | 1-15 | INV.<br>H04B1/401<br>H04B7/06<br>G01S7/00<br>G01S13/32 |
| X | US 2020/319327 A1 (TSVELYKH IVAN [DE] ET AL) 8 October 2020 (2020-10-08)<br>* abstract; figures 1-5 *<br>* paragraph [0001] - paragraph [0006] *<br>* paragraph [0023] - paragraph [0048] * | 1-15 | |
| A | VAN ROSSUM WIM ET AL: "Doppler ambiguity resolution using random slow-time code division multiple access MIMO radar with sparse signal processing",<br>2018 IEEE RADAR CONFERENCE (RADARCONF18), IEEE,<br>23 April 2018 (2018-04-23), pages 441-446,<br>XP033356246,<br>DOI: 10.1109/RADAR.2018.8378599<br>[retrieved on 2018-06-08]<br>* the whole document * | 1-15 | **TECHNICAL FIELDS SEARCHED (IPC)**<br>H04B<br>G01S |

The present search report has been drawn up for all claims

| Place of search | Date of completion of the search | Examiner |
|---|---|---|
| Munich | 11 October 2022 | Galli, Paolo |

EPO FORM 1503 03.82 (P04C01)

**EP 4 270 799 A1**

## ANNEX TO THE EUROPEAN SEARCH REPORT
## ON EUROPEAN PATENT APPLICATION NO.

EP 22 17 1000

11-10-2022

| Patent document cited in search report | Publication date | Patent family member(s) | Publication date |
|---|---|---|---|
| US 2021359739 A1 | 18-11-2021 | CN 113676232 A | 19-11-2021 |
| | | EP 3910814 A1 | 17-11-2021 |
| | | US 2021359739 A1 | 18-11-2021 |
| US 2020319327 A1 | 08-10-2020 | CN 111800173 A | 20-10-2020 |
| | | EP 3726242 A2 | 21-10-2020 |
| | | US 2020319327 A1 | 08-10-2020 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10771124 B2